# EUROPÄISCHE PATENTANMELDUNG

(11) **EP 4 838 739 A1**
(43) Veröffentlichungstag der Anmeldung: **11.11.2026**
(21) Anmeldenummer: 26176470.8
(22) Anmeldetag: 05.05.2026
(51) Int. Cl.: H02J 3/32, H02J 7/82, H02J 7/90, H02J 101/24, H02J 105/12

(54) **VERFAHREN ZUR VOLLLADUNG EINES BATTERIESPEICHERSYSTEMS, STEUERUNGSVORRICHTUNG EINES BATTERIESPEICHERSYSTEMS UND BATTERIESPEICHERSYSTEM**

(30) Priorität: 06.05.2025 DE 102025117359
(71) Anmelder: sonnen GmbH, 87499 Wildpoldsried (DE)
(72) Erfinder: Ackermann, Daniel, 87499 Wildpoldsried (DE); Thalmeier, Dennis, 87471 Durach (DE)

(57) **Zusammenfassung**

Es werden ein Verfahren zur Vollladung eines Batteriespeichersystems, eine Steuerungsvorrichtung eines Batteriespeichersystems und ein Batteriespeichersystem beschrieben. Zur Durchführung der periodisch erforderlichen Vollladung wird ein günstiges Verfahren bereitgestellt, mit dem die Belastung des Versorgungsnetzes reduziert werden kann, die Eigenversorgung verbessert werden kann, Anforderungen des Inhabers des Batteriespeichersystems berücksichtigt werden können sowie Anforderungen eines virtuellen Kraftwerks berücksichtigt werden können.

## Beschreibung

Die Erfindung betrifft ein Verfahren zur geregelten Vollladung eines Batteriespeichersystems, eine Steuerungsvorrichtung eines Batteriespeichersystems zur Durchführung des Verfahrens und ein Batteriespeichersystem mit einer solchen Steuerungsvorrichtung.

Mit der in den vergangenen Jahren zunehmenden Zahl an Anlagen zur Erzeugung elektrischer Energie aus erneuerbaren Energien wie Wind und Sonne steigt auch die Zahl an Batteriespeichersystemen an, um die so gewonnene Energie auch zu Zeiten verfügbar zu haben, zu denen kein Wind weht bzw. keine Sonne scheint.

Batteriespeichersysteme werden auch nach dem englischen Begriff Battery Energy Storage System als BESS bezeichnet. In diesen Batteriespeichersystemen ist eine Mehrzahl einzelner Batteriezellen in Form von Sekundärbatterien, die auch als Akkumulator bezeichnet werden, als aufladbarer Speicher für elektrische Energie in einem oder mehreren Batteriemodulen angeordnet.

Als Einzelzellen werden auf der Lithium-Ionen-Technologie basierende Zellen bevorzugt, aber auch Nickel-Hydridzellen, Bleizellen oder auf Natriumtechnologie basierende Zellen und Redox-Flow-Batterien können verwendet werden. Während eine Kombination aus Elektrolyseur, Brennstoffspeicher und Brennstoffzelle keine galvanische Batterie darstellt, weil der Brennstoffspeicher Stoffe und keine elektrischen Ladungen speichert, sind diese Kombinationen ebenfalls vom Begriff des Batteriespeichersystems umfasst. Eine solche Kombination aus Elektrolyseur, Brennstoffspeicher und Brennstoffzelle ist zur Aufnahme und zeitversetzten Abgabe elektrischer Energie eingerichtet und wird deshalb in diesem Dokument als Batteriespeichersystem angesehen.

Die Leistungsabgabe oder Leistungsaufnahme durch das Batteriespeichersystem wird von einer Steuerungsvorrichtung gesteuert, die zu diesem Zweck auch die Steuerung eines Leistungsumrichters durchführt. Optional kann auch der Leistungsumrichter eine zweite Steuerungsvorrichtung aufweisen. Diese Steuerungsvorrichtung kann über Daten verfügen, die Spannungen der Wechselspannung im Gebäude und die Spannungen des Batteriespeichersystems wiedergeben.

Der Leistungsumrichter wird auch als Wechselrichter bezeichnet. Die Aufgabe dieses Leistungsumrichters besteht in der Umwandlung des Gleichstroms auf Batterieseite in Wechselstrom auf Gebäudeseite beim Entladen des Batteriespeichersystems ins Gebäudenetz. In der entgegengesetzten Richtung vom AC-Gebäudenetz ausgehend kann Laden des Batteriespeichersystems mit DC über den Leistungsumrichter erfolgen.

Zur Bestimmung des aktuellen Zustands eines Batteriespeichersystems, beispielsweise der mit zunehmendem Alter und über den Verlauf der Nutzung abnehmenden Kapazität des Batteriespeichersystems wird üblicherweise periodisch eine Vollladung vorgenommen.

Bisher wurde diese Vollladung rein zeitgesteuert beispielsweise einmal im Monat vorgenommen. Ein solches rein zeitgesteuertes Vorgehen hat jedoch verschiedene Nachteile. Einer dieser Nachteile ist, dass in Abhängigkeit vom vorliegenden Stromvertrag oder von gesetzlichen Vorschriften die mögliche Leistungsaufnahme des Batteriespeichersystems begrenzt sein kann. Ein weiterer Nachteil besteht darin, dass möglicherweise zur gewählten Zeit keine erneuerbare Energie zur Verfügung steht, sodass der Strom kostenpflichtig aus dem Stromnetz bezogen werden muss. Dies kann dazu führen, dass die Vollladung nicht zeitgerecht abgeschlossen werden kann, bevor eine Entnahme elektrischer Energie aus dem Batteriespeichersystem erforderlich wird.

Die Aufgabe des vorliegenden Dokuments besteht darin, die genannten und weitere Nachteile bei der Vollladung von Batteriespeichersystemen zu vermeiden.

In einem ersten Aspekt wird ein Verfahren zur Vollladung eines Batteriespeichersystems bereitgestellt mit folgenden Schritten:
Festlegung eines Betriebsmodus einer Steuerungsvorrichtung des Batteriespeichersystems als Automatikmodus oder Wartungsmodus durch einen Betreiber des Batteriespeichersystems;
wenn die Steuerungsvorrichtung des Batteriespeichersystems im Automatikmodus ist: Überprüfung durch die Steuerungsvorrichtung des Batteriespeichersystems, ob eine vorbestimmte Zeit seit der letzten Vollladung verstrichen ist;
Ermittlung mindestens einer Verbrauchsperiode, bei der eine günstige Bezugsbedingung erfüllt ist, durch die Steuerungsvorrichtung des Batteriespeichersystems;
Vollladung aus dem Versorgungsnetz während der mindestens einen Verbrauchsperiode, bei der eine günstige Bezugsbedingung erfüllt ist;
wenn die Steuerungsvorrichtung des Batteriespeichersystems im Wartungsmodus ist: Festlegung eines Zeitpunkts und einer Energiequelle zur Vollladung, wobei die Energiequelle eine das Batteriespeichersystem versorgende Energieerzeugungsanlage oder das Versorgungsnetz ist, durch einen Betreiber des Batteriespeichersystems.

Hierbei wird unter Vollladung verstanden, dass das Batteriespeichersystem zu 100 % vollgeladen wird. Somit beträgt auch der Zustand der Ladung, nach dem englischen State of Charge mit SOC abgekürzt, 100 %. Dieser Ladezustand wird beispielsweise durch einen Spannungsanstieg mit zunehmender Einprägung eines Ladestroms festgestellt. Dies ist besonders leicht möglich, wenn das Batteriespeichersystem mit Zellen mit Lithium-Eisenphosphat-Chemie (abgekürzt LiFePo oder LFP) aufgebaut ist. In diesem Zustand entspricht die im Batteriespeichersystem enthaltene Ladungsmenge der aktuellen Kapazität des Batteriespeichersystems. Diese Kapazität wird nach dem englischen State of Health mit SOH abgekürzt.

Die Vorgänge des Ladens und Entladens des Batteriespeichersystems werden von der Steuerungsvorrichtung des Batteriespeichersystems kontrolliert. Üblicherweise beinhaltet eine solche Steuerungsvorrichtung ein eigenes Computersystem mit geeigneter Firmware und Software. Im Automatikmodus finden diese Vorgänge des Beladens und Entladens des Batteriespeichersystems nach einem vorgegebenen Muster statt. Dieses Muster wird nach den Vorgaben des Betreibers des Batteriespeichersystems festgelegt.

Der Betreiber des Batteriespeichersystems kann der Inhaber sein, es kann sich aber auch um Wartungspersonal oder Personal des Herstellers des Batteriespeichersystems handeln. Ein weiterer Betreiber kann die Steuerungsvorrichtung eines sogenannten virtuellen Kraftwerks sein. Ein virtuelles Kraftwerk kann Funktionen eines konventionellen Kraftwerks übernehmen, indem eine Vielzahl von Batteriespeichersystemen gleichzeitig in das auch als Versorgungsnetz bezeichnete öffentliche Stromnetz entlädt oder bei entsprechendem Bedarf Leistung aus dem öffentlichen Stromnetz entnimmt. Ein virtuelles Kraftwerk wird nach dem englischen Virtual Power Plant auch mit der Abkürzung VPP bezeichnet. Ein Batteriespeichersystem kann auch über mehrere Betreiber verfügen, beispielsweise den Inhaber und die Steuerungsvorrichtung eines VPP. In diesem Fall hat der Inhaber üblicherweise mit dem Betreiber des VPP einen Vertrag abgeschlossen, dessen Inhalt die Bereitstellung elektrischer Energie an das VPP beinhaltet.

Günstige Bezugsbedingungen können sein:
- Verfügbarkeit elektrischer Energie aus einer das Batteriespeichersystem versorgenden Energieerzeugungsanlage,
- eine maximale Bezugsleistung in Bezug zum vorliegenden Verbrauch, also die verfügbare Bezugsleistung und die bei dieser verfügbaren Bezugsleistung benötigte Zeit zur Fertigstellung der Vollladung,
- das Ergebnis der Ermittlung des für die aktuelle Verbrauchsperiode und der für die nächsten zukünftigen Verbrauchsperioden erwarteten Preise für elektrische Energie,
- das Vorliegen einer Bedarfsanforderung durch die Steuerungsvorrichtung des VPP und/oder
- ein bestimmter Zeitraum, in dem der Bezug elektrischer Leistung aus dem öffentlichen Netz mit einer besonders geringen Belastung für das öffentliche Netz verbunden ist, beispielsweise nachts zwischen 1:00 Uhr und 3:00 Uhr.

Bedarfsanforderungen des VPP beinhalten nicht nur die Abgabe elektrischer Energie durch das Batteriespeichersystem, sondern auch die Aufnahme elektrischer Energie aus dem Versorgungsnetz durch das Batteriespeichersystem. Der letztgenannte Fall kann beispielsweise eintreten, wenn ein Überschuss an aus Fotovoltaik oder Wind erzeugter elektrischer Energie im Versorgungsnetz vorhanden ist.

Die vorbestimmte Zeit seit der letzten Vollladung kann beispielsweise einen ganzen oder einen halben Monat, aber auch eine bestimmte Zahl an Wochen oder Tagen betragen. Die Vollladung kann an dem festgelegten Kalenderdatum zu einer bestimmten Uhrzeit erfolgen. Es ist möglich, diese vorbestimmte Zeit nicht als festen Zeitpunkt nach dem Schema Datum und Uhrzeit festzulegen, sondern als einen Zeitbereich mit einem bestimmten Zeitpunkt als Anfang und einem anderen Zeitpunkt als Ende.

Der Zeitpunkt zur Vollladung kann "jetzt", also die aktuelle Uhrzeit sein, aber auch durch Angabe einer Uhrzeit und möglicherweise eines Datums kann die Festlegung des Zeitpunkts erfolgen.

Unter dem Begriff "Energiequelle" wie hierin verwendet, ist eine Einrichtung, insbesondere ein System oder eine Vorrichtung, zu verstehen, die Energie, insbesondere elektrische Energie liefern kann. Eine Energiequelle kann insbesondere einen oder mehrere Energiespeicher, etwa elektro-chemische Batterien, und/oder einen oder mehrere Energiegeneratoren oder Energiewandler, etwa Photovoltaikanlagen, Windkraftanlagen, Wasserkraftanlagen oder mit Treibstoff angetriebene Stromgeneratoren, aufweisen. Auch das öffentliche Netz ist eine Energiequelle.

Die hier gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist etwa ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives "oder" und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier gegebenenfalls verwendet wird, ist im Sinne von "zwei oder mehr" zu verstehen.

Die Begriffe "erste/r/s", "zweite/r/s", "dritte/r/s" und ähnliche Begriffe in der Beschreibung und in den Ansprüchen werden zur Unterscheidung zwischen ähnlichen bzw. ansonsten gleich benannten Elementen und nicht unbedingt zur Beschreibung einer sequenziellen, räumlichen oder chronologischen Reihenfolge verwendet. Es versteht sich, dass die so verwendeten Begriffe unter geeigneten Umständen austauschbar sind und die hierin beschriebenen Ausführungsformen der Lösung auch in anderen als den hier beschriebenen oder dargestellten Reihenfolgen funktionieren können.

Unter dem Begriff "konfiguriert" oder "eingerichtet", eine bestimmte Funktion zu erfüllen, (und jeweiligen Abwandlungen davon), wie er hier gegebenenfalls verwendet wird, ist zu verstehen, dass eine diesbezügliche Vorrichtung oder Komponente davon bereits in einer Ausgestaltung oder Einstellung vorliegt, in der sie die Funktion ausführen kann oder sie zumindest so einstellbar - d. h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, sodass das Konfigurieren mittels einer Auswahl einer dieser Konfigurationen bzw. Betriebsmodi erfolgen kann.

Durch das Ermitteln einer günstigen Bezugsbedingung kann auf günstige Weise der Bezug elektrischer Energie aus dem öffentlichen Netz minimiert werden. Wenn der Bezug elektrischer Energie aus dem öffentlichen Netz dennoch erforderlich ist, lassen sich die gesetzlichen Vorschriften, beispielsweise der Bezug einer maximalen Leistung einhalten und/oder negative Konsequenzen aus gesetzlichen Vorschriften vermeiden. Eine solche negative Konsequenz kann beispielsweise eine Abregelung auf ein gesetzlich bestimmtes Leistungsniveau durch den Energieversorger oder eine Strafzahlung sein. Schließlich kann durch das Ermitteln einer günstigen Bezugsbedingung auch noch der Preis für die aus dem öffentlichen Netz bezogene elektrische Energie minimiert werden.

In Ausführungsformen weist das Verfahren auf zur Ermittlung einer günstigen Bezugsbedingung durch die Steuerungsvorrichtung des Batteriespeichersystems die Überprüfung, wieviel elektrische Energie aus einer das Batteriespeichersystem versorgenden Energieerzeugungsanlage verfügbar ist und, wenn die vorbestimmte Zeit seit der letzten Vollladung verstrichen ist, sowie Vollladung aus der das Batteriespeichersystem versorgenden Energieerzeugungsanlage in dem Fall, dass eine ausreichende Menge elektrischer Energie aus der das Batteriespeichersystem versorgenden Energieerzeugungsanlage verfügbar ist.

Die das Batteriespeichersystem versorgende Energieerzeugungsanlage ist bevorzugt eine Erzeugungsanlage erneuerbarer Energien wie eine Windenergieanlage und besonders bevorzugt eine Fotovoltaik-Solaranlage. Beispielsweise kann bei Sonnenschein am Mittag der Batteriespeicher mit den für den Betreiber des Batteriespeichersystems verfügbaren Energieerzeugungssystemen geladen werden, weil zu dieser Zeit Photovoltaiksysteme ein großes Angebot an elektrischer Energie bereitstellen. Es kann sich bei der das Batteriespeichersystem versorgenden Energieerzeugungsanlage aber auch um einen Generator handeln. Solche Energieerzeugungsanlagen werden in zunehmendem Maße in Privathaushalten, Industriebetrieben und öffentlichen Gebäuden installiert.

Wenn der Bezug elektrischer Energie aus einer das Batteriespeichersystem versorgenden Energieerzeugungsanlage möglich ist, kann der Bezug elektrischer Energie aus dem öffentlichen Stromnetz vermieden werden. So kann das öffentliche Stromnetz entlastet werden. Weiter wird es dadurch möglich, das Batteriespeichersystems umweltschonend voll zu laden, wenn die Energieerzeugungsanlage mit erneuerbarer Energie betrieben wird. Schließlich lässt sich auch die Autarkie durch bevorzugten Bezug elektrischer Energie aus der eigenen Energieerzeugungsanlage erhöhen, also die Abhängigkeit vom Versorgungsnetz reduzieren.

In Ausführungsformen weist das Verfahren auf:
- Ermittlung des für die aktuelle Verbrauchsperiode und der für eine vorbestimmte Zahl an nächsten zukünftigen Verbrauchsperioden erwarteten Preise für elektrische Energie;
- Ermittlung mindestens einer Verbrauchsperiode mit minimalem Preis für elektrische Energie aus der aktuellen Verbrauchsperiode und der vorbestimmten Zahl an nächsten zukünftigen Verbrauchsperioden;
- Vollladung aus dem Versorgungsnetz während der mindestens einen Verbrauchsperiode mit minimalem Preis für elektrische Energie aus der aktuellen Verbrauchsperiode und der vorbestimmten Zahl an nächsten zukünftigen Verbrauchsperioden.

Örtliche Energieversorger stellen in zunehmendem Maß sogenannte zeitabhängige oder dynamische Tarife bereit. Ein zeitabhängiger Tarif für elektrische Energie besteht darin, dass zu unterschiedlichen Uhrzeiten unterschiedliche Kosten für die bereitgestellte elektrische Energie verlangt werden. Ein sogenannter dynamischer Tarif für elektrische Energie orientiert sich hingegen an den tatsächlichen Preisen, die der Energieversorger für die Bereitstellung elektrischer Energie an den Endkunden bezahlen muss. Oft werden diese Preise in Zeitintervallen von 15 Minuten ermittelt.

Auf das Verfahren zur Ermittlung mit minimalem Preis für elektrische Energie wird im Folgenden eingegangen. Der Preis für elektrische Energie wird auch als Stromtarif bezeichnet. Wenn der Betreiber des Batteriespeichersystems über einen Stromvertrag verfügt, bei dem der Stromtarif konstant ist, gilt dieser Stromtarif als minimaler Tarif.

Der Bezug elektrischer Energie während Verbrauchsperioden mit minimalem Preis bietet den Vorteil, dass dieses Vorgehen dem Umwelt- und Klimaschutz dient, da erfahrungsgemäß der Strompreis besonders dann fällt, wenn viel erneuerbare Energien zur Führung stehen. Weiter können die Kosten des Bezugs elektrischer Energie aus dem Versorgungsnetz gering gehalten werden.

In Ausführungsformen erfolgt bei dem Verfahren die Ermittlung des für die aktuelle Verbrauchsperiode und der für eine vorbestimmte Zahl an nächsten zukünftigen Verbrauchsperioden erwarteten Preise für elektrische Energie anhand von Daten eines zeitabhängigen Tarifs für elektrische Energie.

Mit einer solchen Vorgehensweise wird es möglich, dass die Vollladung einerseits anhand der Daten des zeitabhängigen Tarifs für elektrische Energie und andererseits in Abhängigkeit von der Uhrzeit erfolgt. Somit lassen sich die Kosten des Energiebezugs aus dem Versorgungsnetz steuern.

In Ausführungsformen erfolgt bei dem Verfahren die Ermittlung des für die aktuelle Verbrauchsperiode und der für eine vorbestimmten Zahl an nächsten zukünftigen Verbrauchsperioden erwarteten Preise für elektrische Energie anhand von Daten eines dynamischen Tarifs für elektrische Energie. Hierbei werden bevorzugt Daten des Anbieters des dynamischen Tarifs verwendet.

Mit einer solchen Vorgehensweise wird es möglich, dass die Vollladung anhand von Daten des dynamischen Tarifs für elektrische Energie, beispielsweise anhand von Daten desselben Datums des Vorjahres und in Abhängigkeit von der Uhrzeit erfolgt. Somit lassen sich die Kosten des Energiebezugs aus dem Versorgungsnetz steuern.

In Ausführungsformen der letztgenannten Ausführungsformen erfolgt bei dem Verfahren die Ermittlung des für die aktuelle Verbrauchsperiode und der für eine vorbestimmten Zahl an nächsten zukünftigen Verbrauchsperioden erwarteten Preise für elektrische Energie anhand von Prognosedaten eines dynamischen Tarifs für elektrische Energie. Hier kann ergänzend zu den Daten des Anbieters des dynamischen Tarifs auf vor Ort verfügbaren Daten zurückgegriffen werden.

Mit einer solchen Vorgehensweise wird es möglich, dass die Vollladung anhand von prognostizierten Daten des dynamischen Tarifs für elektrische Energie, beispielsweise anhand von Vorhersagen für Sonnenscheindauer, Bewölkung und/oder Windstärken, aber auch sonstigen Quellen für Preisprognosen erfolgt. Somit lassen sich die Kosten des Energiebezugs aus dem Versorgungsnetz noch genauer steuern.

In Ausführungsformen wird die Vollladung ausgesetzt, solange ein vorrangiges Verfahren auf der Steuerungsvorrichtung des Batteriespeichersystems ausgeführt wird.

Ein Beispiel eines vorrangigen Verfahrens ist die Steuerung des Batteriespeichersystems über ein Energiemanagementsystem, wenn der Betreiber des Batteriespeichersystems über ein solches Energiemanagementsystem verfügt. Ein anderes Beispiel eines vorrangigen Verfahrens ist das bedarfs- oder zeitgesteuerte Laden eines an das Batteriespeichersystems angeschlossenen Elektrofahrzeug. Ein drittes Beispiel eines vorrangigen Verfahrens ist der bedarfs- oder zeitgesteuerte Betrieb einer Wärmepumpe oder eines elektrischen Heizstabs zur Erwärmung von Wasser für Heizung oder anderweitige Verwendung im Haus. Die hier genannten Beispiele dienen der Berücksichtigung der Anforderungen des Inhabers des Batteriespeichersystems. Ein weiteres Beispiel kann die Anforderung von dem Steuerungsrechner eines VPP an das Batteriespeichersystem sein, elektrische Energie an das Versorgungsnetz bereitzustellen.

In Ausführungsformen beginnt die Steuerungsvorrichtung des Batteriespeichersystems die Vollladung mit einer weiteren Verzögerung, in dem Fall, dass die Verbrauchsperiode, bei der eine günstige Bezugsbedingung erfüllt ist, einen bestimmten Zeitraum darstellt. Diese weitere Verzögerung kann beispielsweise von der Steuerung eines virtuellen Kraftwerks festgelegt werden. Wenn die weitere Verzögerung von der Steuerungsvorrichtung das Batteriespeichersystems selbst festgelegt wird, kann es sich um eine zufällig ermittelte Zeit handeln.

Auf diese Weise kann einerseits eine starke Belastung des öffentlichen Netzes vermieden werden, die entstehen könnte, wenn eine Vielzahl von Batteriespeichersystemen des gleichen Typs gleichzeitig die Vollladung ausführen würde. Wenn eine Vielzahl von Batteriespeichersystemen in einem VPP zusammengeschaltet ist, wird durch eine solche zufällige Verzögerung des Beginns der Vollladung auch vermieden, dass zu viele Batteriespeichersysteme zum gleichen Zeitpunkt während der Durchführung der Vollladung dem VPP nicht zur Verfügung stehen. In einem solchen Fall könnte es dazu kommen, dass der Betreiber das VPP nicht mehr in der Lage ist, die vertraglichen Verpflichtungen zu erfüllen, weil der Betreiber des VPP nicht über eine hinreichende Anzahl von Batteriespeichersystemen verfügt.

In einem zweiten Aspekt des vorliegenden Dokuments wird eine Steuerungsvorrichtung in einem Batteriespeichersystem bereitgestellt, die zur Durchführung eines der vorstehend genannten Verfahren eingerichtet ist.

In einem dritten Aspekt des vorliegenden Dokuments wird ein Batteriespeichersystem bereitgestellt, das Folgendes aufweist: einen Leistungsanschluss, mittels dessen elektrische Energie in das Batteriespeichersystem gespeist und aus dem Batteriespeichersystem entnommen werden kann, einen zwischen den Batteriezellen des Batteriespeichersystems und dem Leistungsanschluss angeordneten Leistungsumrichter mit einer Steuerungsvorrichtung nach dem zweiten Aspekt, die eingerichtet ist, elektrische Leistungsflüsse von und zu dem mindestens einen Batteriemodul und durch den ersten Leistungsumrichter zu steuern.

Elektrischer Leistungsfluss bezeichnet den Fluss elektrischer Energie in dem System aus Versorgungsnetz, Hausnetz, Speicherbatterie und einem möglichen weiteren Energieerzeuger. Weitere Energieerzeuger werden im folgenden Text genauer beschrieben. Hierbei können Versorgungsnetz und Speicherbatterie elektrische Energie sowohl aufnehmen als auch abgeben. Das Hausnetz kann im Normalfall nur elektrische Energie aufnehmen, und weitere Energieerzeuger geben häufig nur elektrische Energie ab.

Die Steuerungsvorrichtung kontrolliert den Leistungsumrichter und weist dafür eine elektronische Steuerung zur Steuerung der elektrischen Energieflüsse auf. Die Steuerungsvorrichtung entscheidet beispielsweise anhand des Ladezustands der Batterie und der Leistungsabgabe eines möglicherweise vorhandenen weiteren Energieerzeugers, ob durch Einschalten eines Geräts im Hausnetz erforderliche Leistung, also ein zusätzlicher elektrischer Leistungsfluss vom Versorgungsnetz, von der Speicherbatterie und/oder von dem weiteren Energieerzeuger ins Hausnetz gespeist wird.

Die Steuerungsvorrichtung kann weiter eine Einrichtung aufweisen, die als Interface zu einem menschlichen Benutzer eingerichtet ist. Diese Einrichtung kann mit einer Anzeigeeinrichtung mit einem Bildschirm zur Anzeige von Daten, und/oder mit Bedienelementen wie Knöpfen, Schiebe- und/oder Drehreglern ausgeführt sein. Ein Touchscreen ist als Anzeigeeinrichtung ebenso möglich wie ein elektronischer Rechner, der zu einer Kommunikation mit einem anderen elektronischen Rechner, wie einem Personal Computer oder einer App auf einem Smartphone eingerichtet ist. Schließlich kann die Steuerungsvorrichtung auch in einer Cloud angeordnet sein.

Mittels des Leistungsanschlusses wird die elektrische Verbindung zwischen dem AC-Gebäudenetz und der AC-Seite des ersten Leistungsumrichters bewerkstelligt.

Da die Steuerungsvorrichtung elektrische Leistungsflüsse steuert, ist sie üblicherweise eingerichtet, die mit den Leistungsflüssen bewegte elektrische Energie zu erfassen und zu speichern. Die erfassten Energiemengen werden dann mittels der vorstehend beschriebenen Anzeigeeinrichtung einem Benutzer des Batteriespeichersystems angezeigt. Der Benutzer kann über die genannten Bedienelemente oder anderen elektronischen Rechner dann in die Steuerung der elektrischen Leistungsflüsse eingreifen.

In Ausführungsformen weist das Batteriespeichersystem einen Anschluss für eine Energiegewinnungsvorrichtung zur Erzeugung elektrischer Energie auf, der zur Bereitstellung der von der Energiegewinnungsvorrichtung erzeugten elektrischen Energie an das Batteriespeichersystem und/oder eine Gebäudeverteilung eingerichtet ist, wobei die Steuerungsvorrichtung zur Steuerung elektrischen Leistungsflusses von der Energiegewinnungsvorrichtung zum Batteriespeichersystem eingerichtet ist.

Die Erfindung wird im Folgenden anhand der Zeichnungen näher beschrieben. Dabei zeigt
Fig. 1 ein Flußdiagramm des Verfahrens;
Fig. 2 einen Datensatz mit günstigen Bezugsbedingungen;
Fig. 3 schematisch ein Gebäude der Fig. 1 mit einem Batteriespeichersystem;
Fig. 4 eine Auftragung des Zeitverlaufs einer zeitgesteuerten Vollladung;
Fig. 5 eine Auftragung des Zeitverlaufs einer zeitgesteuerten Vollladung mehrerer Batteriespeichersysteme, bei denen die Vollladung zeitlich versetzt erfolgt.

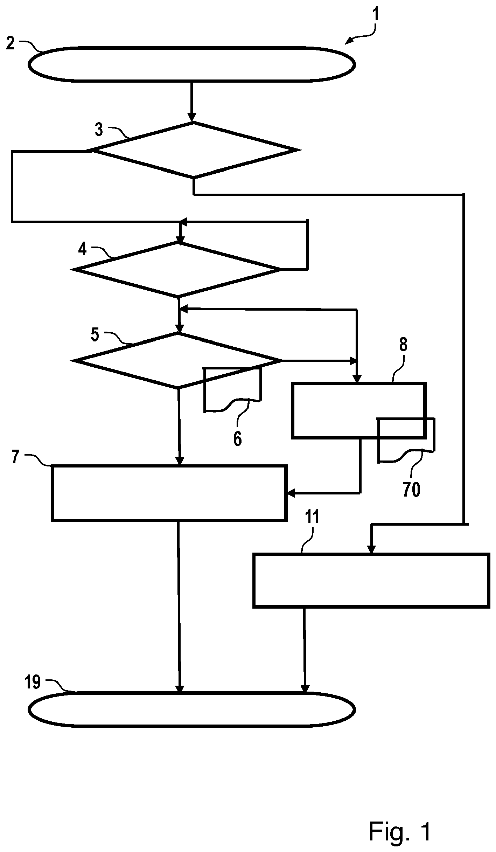

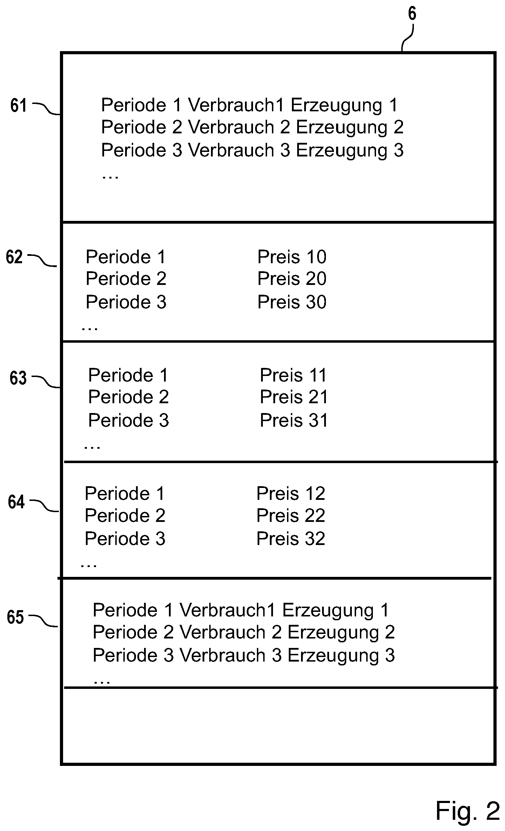

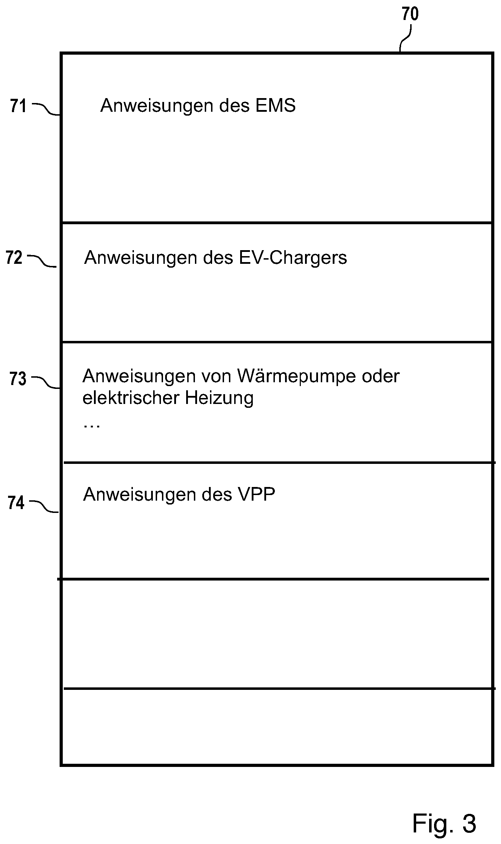

Fig. 1 zeigt beispielhaft ein auf einer Steuerungsvorrichtung eines Batteriespeichersystems ausgeführtes Verfahren 1 nach dem ersten Aspekt. Im Schritt 2 beginnt das Verfahren 1. Im Schritt 3 erfolgt die Festlegung, ob sich die Steuerungsvorrichtung des Batteriespeichersystems im Automatikmodus oder im Wartungsmodus befindet. In dem Fall des Automatikmodus fährt das Verfahren im Schritt 4 fort mit der Überprüfung, ob seit der letzten Vollladung eine vorbestimmte Zeit verstrichen ist. Wenn dies noch nicht der Fall ist, erfolgt eine erneute Überprüfung. Wenn diese Zeit verstrichen ist, wird im Schritt 5 anhand eines in der Steuerungsvorrichtung hinterlegten und in Fig. 2 dargestellten Datensatzes 6 überprüft, ob eine günstige Bezugsbedingung erfüllt ist. Schritt 5 kann so lange wiederholt werden, bis eine günstige Bezugsbedingung vorliegt oder eine weitere vorbestimmte Zeit 8 verstrichen ist. In dem Fall, dass diese weitere vorbestimmte Zeit verstrichen ist, oder in dem Fall, dass eine günstige Bezugsbedingung vorliegt, erfolgt die Vollladung 7 während der mindestens einen Verbrauchsperiode, bei der eine günstige Bezugsbedingung 6 erfüllt ist. Im Timerschritt 8 kann weiter überprüft werden, ob gerade Anforderungen eines vorrangigen Verfahrens vorliegen, die eine Aussetzung der Vollladung erforderlich machen können. Die Anforderungen vorrangiger Verfahren können in einem in Fig. 3 dargestellten Datensatz 70 in der Steuerungsvorrichtung des Batteriespeichersystems hinterlegt sein.

In dem Fall, dass die Steuerungsvorrichtung des Batteriespeichersystems im Wartungsmodus ist, erfolgt die Festlegung 11 eines Zeitpunkts und einer Energiequelle zur Vollladung, wobei die Energiequelle eine das Batteriespeichersystem versorgende Energieerzeugungsanlage oder das Versorgungsnetz ist, durch den Betreiber des Batteriespeichersystems.

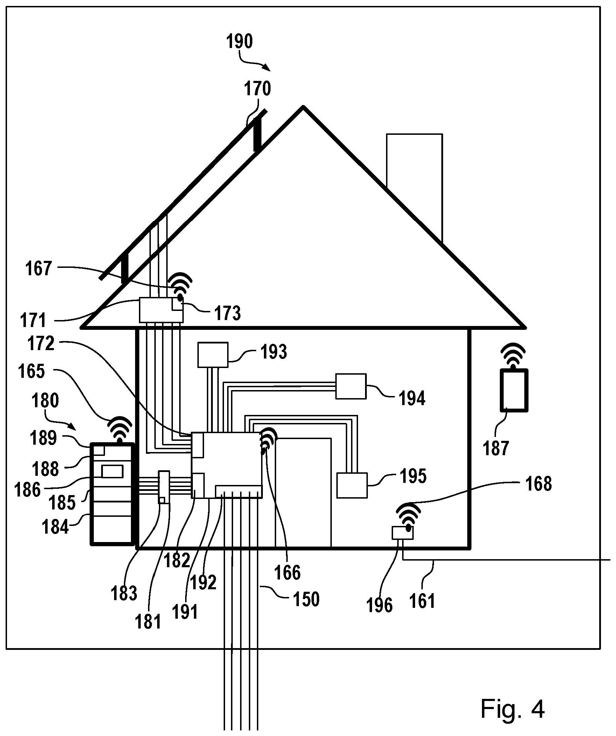

Der in Fig.2 beispielhaft dargestellte in der Steuerungsvorrichtung hinterlegte Datensatz 6 günstiger Bezugsbedingungen enthält im Teildatensatz 61 die Differenzen zwischen Verbrauch und Erzeugung aus der Energieerzeugungsvorrichtung 170 (s. Fig. 4) für verschiedene Verbrauchsperioden. In diesem Teildatensatz 61 sind die Daten einmalig fest vorgegeben, beispielsweise getrennt für Wochentage, Wochenenden, Feiertage und Abwesenheitstage (beispielsweise Urlaubstage). Teildatensatz 62 enthält für weitere Verbrauchsperioden, die den Verbrauchsperioden in Teildatensatz 61 entsprechen können, die Preise eines zeitabhängigen Tarifs. Teildatensatz 63 enthält für weitere Verbrauchsperioden die Preise eines dynamischen Tarifs. Teildatensatz 64 enthält für weitere Verbrauchsperioden prognostizierte Preise eines dynamischen Tarifs. Teildatensatz 65 entspricht dem äußeren Aussehen Teildatensatz 61, berücksichtigt jedoch prognostizierte Daten für Erzeugung und Verbrauch, die zum Beispiel anhand historischer Daten, Wetterprognosen und Verbrauchsprognosen ermittelt wurden. Auch hier können wie in Teildatensatz 61 Vorgaben des Betreibers beispielsweise für Urlaubstage hinterlegt sein.

In Fig.3 ist ein weiterer in der Steuerungsvorrichtung hinterlegter Datensatz 70 dargestellt, in dem Anweisungen vorrangiger Verfahren hinterlegt sind. Beispielhaft sind dargestellt Anweisungen 71 des Energiemanagementsystems, Anweisungen 72 eines Ladegeräts für ein elektrisches Fahrzeug, Anweisungen 73 einer Wärmepumpe oder eines elektrischen Heizstabs sowie Anweisungen 74 eines virtuellen Kraftwerks. Die Steuerungsvorrichtung des Batteriespeichersystems kann an dieser oder einer anderen Stelle auch Daten zur Priorisierung der Anweisungen vorrangiger Verfahren enthalten. So kann zum Beispiel die Anforderung eines Bedarfs an elektrischer Energie für die Wärmepumpe oder den Heizstab zur Warmwasserbereitung nachrangig behandelt werden, wenn in dem zugeordneten System noch eine ausreichende Wärmemenge vorhanden ist.

In Fig. 4 ist schematisch das Gebäude 190 gezeigt. Das Gebäude 190 ist über die Zuleitung 150 vom Versorgungsnetz (hier das Niederspannungsnetz) mittels des Netzanschlusses 192 an die auch als Gebäudeverteilung bezeichnete Hausverteilung 191 angeschlossen. Das Batteriespeichersystem 180 ist in diesem Beispiel außen neben dem Gebäude angeordnet. Es ist auch möglich, das Batteriespeichersystem im Innern des Gebäudes, beispielsweise in der Garage oder im Keller unterzubringen. Der Verbraucher 190 ist hier durch ein Haus dargestellt. Das hier symbolisch dargestellte Haus 190 kann nicht nur ein von einer Familie bewohntes Haus sein, sondern auch ein Haus mit mehreren darin wohnenden Parteien oder ein geschäftlich genutztes Gebäude.

Das Haus 190 ist über eine Kommunikationsleitung 161, beispielsweise eine Internetleitung oder eine andere Telekommunikationsleitung mit einem Versorgungsunternehmen kommunikativ verbunden. Der Nutzer des Gebäudes kann, wie eingangs beschrieben, auch Betreiber des Batteriespeichersystems 180 sein. Versorgungsunternehmen kann insbesondere das Energieversorgungsunternehmen sein, mit dem der Nutzer des Gebäudes 190 einen Liefervertrag über elektrische Energie abgeschlossen hat. Weiter kann das Versorgungsunternehmen auch einen Vertrag über ein virtuelles Kraftwerk VPP mit dem Nutzer des Gebäudes 190 abgeschlossen haben.

Im vorliegenden Beispiel weist das Batteriespeichersystem 180 zwei Batteriemodule 184 und 185 auf. Es können auch nur ein Batteriemodul oder mehr als zwei Batteriemodule vorgesehen sein. Mittels des Leistungsanschlusses 182 sind der erste Leistungsumrichter 181 und somit das Batteriespeichersystem 180 an die Hausverteilung 191 angeschlossen. Die erste Steuerungsvorrichtung 188 ist mit dem damit verbundenen Datenträger 189 in dieser Ausführungsform im Gehäuse des Batteriespeichersystems 180 angeordnet.

Der erste Leistungsumrichter 181 kann von einer zweiten Steuerungsvorrichtung 183 gesteuert werden, die mittels einer hier nicht gezeigten Verbindung an die erste Steuerungsvorrichtung 188 angeschlossen sein kann. Im hier gezeigten Beispiel ist der Leistungsumrichter 181 im Innern des Gebäudes 190 und nicht im Batteriespeichersystem 180 angeordnet. Es ist möglich, den Leistungsumrichter 181 im Innern des Batteriespeichersystems 180 unterzubringen. Im vorstehenden Text wurde dieser erste Leistungsumrichter bereits als Leistungsumrichter erwähnt.

Eine Energiegewinnungsvorrichtung 170 ist hier auf dem Dach des Gebäudes 190 angeordnet. Im vorliegenden Beispiel handelt es sich bei der Energiegewinnungsvorrichtung 170 um eine Photovoltaikanlage. Als Energiegewinnungsvorrichtung 170 können auch mit Windenergie oder von strömendem Wasser betriebene Generatoren verwendet werden.

Diese Photovoltaikanlage ist über einen zweiten Leistungsumrichter 171 und den Leistungsanschluss der Energiegewinnungsvorrichtung 172 elektrisch mit der Gebäudeverteilung 191 verbunden. Es ist auch möglich, den zweiten Leistungsumrichter 171 nur zur Umwandlung von Gleichspannung zu verwenden, den zweiten Leistungsumrichter 171 an das DC-Bussystem des Batteriespeichersystems anzuschließen und den ersten Leistungsumrichter 181 als Wechselrichter zu verwenden. Bei dem zweiten Leistungsumrichter 171 handelt es sich jedoch nicht um den in der Einleitung der Beschreibung und in den Ansprüchen behandelten Leistungsumrichter.

Verteilt in dem Gebäude 190 befinden sich Gebäudebereiche 193, 194 und 195. Beispielhaft sind hier drei Gebäudebereiche eingezeichnet. Die Zahl der an die Hausverteilung 191 direkt oder indirekt angeschlossenen Gebäudebereiche wurde hier beispielhaft gewählt und kann von drei verschieden sein. In den jeweiligen Gebäudebereichen 193, 194 und 195 sind dann die hier nicht eingezeichneten einzelnen Verbraucher für elektrische Energie angeordnet.

Elektrische Energieflüsse vom Batteriespeichersystem 180 über den ersten Leistungsumrichter 181, vom Niederspannungsnetz 150 und von der Energiegewinnungsvorrichtung 170 zur Hausverteilung 191 sowie von der Hausverteilung 191 zu den Gebäudebereichen 193, 194 und 195, zum Batteriespeichersystem 180 und in das Niederspannungsnetz 150 erfolgen über die in Fig.4 durch Linien symbolisierten elektrischen Leitungen.

Das Batteriespeichersystem 180 verfügt im vorliegenden Beispiel über eine erste interne Kommunikation 165, die im vorliegenden Beispiel über ein WiFi Symbol gekennzeichnet ist. Ebenso kann die Hausverteilung 191 über eine zweite interne Kommunikation 166 verfügen. Der zweite Leistungsumrichter 171 der Energiegewinnungsvorrichtung 170 kann von einer dritten Steuerungsvorrichtung 173 kontrolliert werden, die über eine dritte interne Kommunikationseinrichtung 167 verfügen kann, die wie die zweite interne Kommunikationseinrichtung 166 ebenfalls über ein WiFi Symbol dargestellt ist. Die erste Kommunikation 161 wird für das ganze Gebäude oft über einen Telekommunikationsanschluss im Telefonnetz realisiert. Über einen Router 196 wird dann eine vierte interne, ebenfalls über ein WiFi Symbol dargestellte drahtlose Kommunikation 168 mit den vorstehend genannten Kommunikationsgeräten 165 bis 167 und der im folgenden Text beschriebenen externen Eingabevorrichtung 187 realisiert.

Die erste Steuerungsvorrichtung 188 verfügt im vorliegenden Beispiel über eine ebenfalls im Gehäuse des Batteriespeichersystems 180 angeordnete Anzeigevorrichtung 186. Wenn diese Anzeigevorrichtung 186 als Touchscreen ausgeführt ist, kann sie auch zur Eingabe von Daten dienen. Ergänzend oder alternativ zur Dateneingabe an einer als Touchscreen ausgeführten oder mit einer Tastatur verbundenen Anzeigevorrichtung 186 kann auch eine externe Eingabevorrichtung 187 verwendet werden. Die externe Eingabevorrichtung 187 kann beispielsweise über eine App auf einem Smartphone, einem Tablet oder einem Personal Computer verwirklicht werden. So kann ein Smartphone als zum Batteriespeichersystem externe Anzeigevorrichtung 187 dienen. Die externe Eingabevorrichtung 187 ist ebenfalls mit einem WiFi Symbol dargestellt, um die Möglichkeit der drahtlosen Kommunikation beispielsweise mit der ersten Steuerungsvorrichtung 188 wiederzugeben.

Der Fachmann erkennt ohne weiteres, dass die erste Steuerungsvorrichtung 188 und die zweite Steuerungsvorrichtung 183 in einer gemeinsamen Steuerungsvorrichtung zusammengefasst sein können. Die erste Steuerungsvorrichtung 188 und die zweite Steuerungsvorrichtung 183 werden zusammengefasst in der Einleitung der Beschreibung und den Ansprüchen als Steuerungsvorrichtung bezeichnet. Die erste Steuerungsvorrichtung 188 und die zweite Steuerungsvorrichtung 183 können gemeinsam mit einem Energiemanagementsystem ausgerüstet sein.

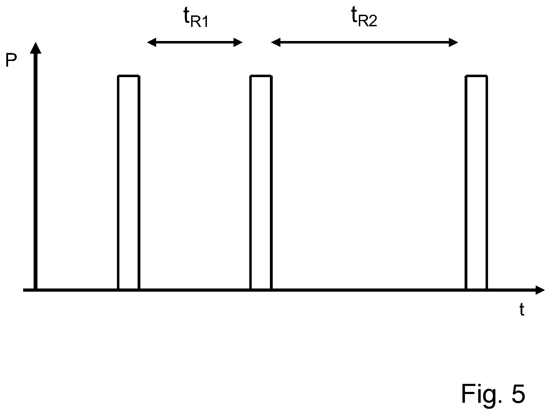

Fig. 5 zeigt eine Auftragung der Leistungsaufnahme dreier Batteriespeichersysteme über der Zeit. Auf der senkrechten Achse ist die Leistung aufgetragen. Zu Beginn nimmt das erste Batteriespeichersystem Leistung auf. Wenn die Leistungsaufnahme dieses Batteriespeichersystems abgeschlossen ist, erfolgt eine Verzögerung um die Zeit t_{R1}, bevor das zweite Batteriespeichersystem der Vollladung beginnt. Wenn die Leistungsaufnahme des zweiten Batteriespeichersystems abgeschlossen ist, erfolgt eine Verzögerung um die Zeit t_{R2}, bevor das dritte Batteriespeichersystem der Vollladung beginnt. Die zufällig gewählten Verzögerungen t_{R1} und t_{R2} können beispielsweise von der Steuerungsvorrichtung eines virtuellen Kraftwerks an die einzelnen Batteriespeichersysteme übermittelt werden. Es ist aber auch möglich, dass jedes Batteriespeichersystem ohne Beeinflussung von außen mit einem Zufallsgenerator in einer der genannten Steuerungsvorrichtungen Verzögerungen t_{R1} und t_{R2} ermittelt.

### Bezugszeichenliste

- 150.: Niederspannungsleitung
- 161.: erste Kommunikation
- 162.: zweite Kommunikation
- 163.: dritte Kommunikation
- 165.: erste interne Kommunikation
- 166.: zweite interne Kommunikation
- 167.: dritte interne Kommunikation
- 168.: vierte interne Kommunikation
- 170.: Energiegewinnungsvorrichtung
- 171.: zweiter Leistungsumrichter
- 172.: Leistungsanschluss der Energiegewinnungsvorrichtung
- 173.: dritte Steuerungsvorrichtung
- 180.: Batteriespeichersystem
- 181.: erster Leistungsumrichter
- 182.: Leistungsanschluss des Batteriespeichersystems
- 183.: zweite Steuerungsvorrichtung
- 184.: Batteriemodul
- 185.: Batteriemodul
- 186.: Anzeigevorrichtung
- 187.: externe Eingabevorrichtung
- 188.: erste Steuerungsvorrichtung
- 189.: Datenträger
- 190.: Gebäude
- 191.: Gebäudeverteilung
- 192.: Netzanschluss
- 193.: Gebäudebereich
- 194.: Gebäudebereich
- 195.: Gebäudebereich
- 196.: Kommunikationsanschluss

## Patentansprüche

1. Verfahren (1) zur Vollladung (7, 11) eines Batteriespeichersystems (180) mit folgenden Schritten:
Festlegung (3) eines Betriebsmodus einer Steuerungsvorrichtung (188) des Batteriespeichersystems (180) als Automatikmodus oder Wartungsmodus durch einen Betreiber des Batteriespeichersystems (180);
wenn die Steuerungsvorrichtung (188) des Batteriespeichersystems (180) im Automatikmodus ist:
Überprüfung (4) durch die Steuerungsvorrichtung (188) des Batteriespeichersystems (180),
ob eine vorbestimmte Zeit seit der letzten Vollladung verstrichen ist;
Ermittlung (5) mindestens einer Verbrauchsperiode, bei der eine günstige Bezugsbedingung (6) erfüllt ist, durch die Steuerungsvorrichtung (188) des Batteriespeichersystems (180);
Vollladung (7) während der mindestens einen Verbrauchsperiode, bei der eine günstige Bezugsbedingung (6) erfüllt ist, durch die Steuerungsvorrichtung (188) des Batteriespeichersystems (180);
wenn die Steuerungsvorrichtung (188) des Batteriespeichersystems (180) im Wartungsmodus ist:
Festlegung (11) eines Zeitpunkts und einer Energiequelle zur Vollladung, wobei die Energiequelle eine das Batteriespeichersystem versorgende Energieerzeugungsanlage (170) oder das Versorgungsnetz (150) ist, durch einen Betreiber des Batteriespeichersystems (180).

2. Verfahren (1) nach Anspruch 1 **dadurch gekennzeichnet, dass** die Ermittlung (5) einer günstigen Bezugsbedingung (6) durch die Steuerungsvorrichtung (188) des Batteriespeichersystems (180) erfolgt mittels Überprüfung, wieviel elektrische Energie (61) aus einer das Batteriespeichersystem versorgenden Energieerzeugungsanlage (170) verfügbar ist; weiter **gekennzeichnet durch**
Vollladung aus der das Batteriespeichersystem (180) versorgenden Energieerzeugungsanlage (170) in dem Fall, dass eine ausreichende Menge elektrischer Energie aus der das Batteriespeichersystem versorgenden Energieerzeugungsanlage (170) verfügbar ist.

3. Verfahren (1) nach Anspruch 2, für den Fall, dass keine ausreichende Menge elektrischer Energie (61) aus der das Batteriespeichersystem (180) versorgenden Energieerzeugungsanlage verfügbar ist, **gekennzeichnet durch** die Schritte:
- Ermittlung der für die aktuelle Verbrauchsperiode und der für eine vorbestimmte Zahl an nächsten zukünftigen Verbrauchsperioden erwarteten Preise (62) für elektrische Energie;
- Ermittlung mindestens einer Verbrauchsperiode mit minimalem Preis für elektrische Energie aus der aktuellen Verbrauchsperiode und der vorbestimmten Zahl an nächsten zukünftigen Verbrauchsperioden;
- Vollladung aus dem Versorgungsnetz (150) während der mindestens einen Verbrauchsperiode mit minimalem Preis für elektrische Energie aus der aktuellen Verbrauchsperiode und der vorbestimmten Zahl an nächsten zukünftigen Verbrauchsperioden.

4. Verfahren (1) nach Anspruch 3, bei dem die Ermittlung des für die aktuelle Verbrauchsperiode und der für eine vorbestimmte Zahl an nächsten zukünftigen Verbrauchsperioden erwarteten Preise für elektrische Energie anhand von Daten eines zeitabhängigen Tarifs für elektrische Energie erfolgt.

5. Verfahren (1) nach Anspruch 3, bei dem die Ermittlung des für die aktuelle Verbrauchsperiode und der für eine vorbestimmte Zahl an nächsten zukünftigen Verbrauchsperioden erwarteten Preise (63) für elektrische Energie anhand von Daten eines dynamischen Tarifs für elektrische Energie erfolgt.

6. Verfahren (1) nach Anspruch 5, bei dem die Ermittlung des für die aktuelle Verbrauchsperiode und der für eine vorbestimmte Zahl an nächsten zukünftigen Verbrauchsperioden erwarteten Preise (64) für elektrische Energie anhand von Prognosedaten eines dynamischen Tarifs für elektrische Energie erfolgt.

7. Verfahren (1) nach einem der vorhergehenden Ansprüche, **dadurch gekennzeichnet, dass** die Vollladung ausgesetzt wird, solange ein vorrangiges Verfahren (70) auf der Steuerungsvorrichtung (188) des Batteriespeichersystems (180) ausgeführt wird.

8. Verfahren (1) nach Anspruch 1 **dadurch gekennzeichnet, dass**, in dem Fall, dass die Verbrauchsperiode, bei der eine günstige Bezugsbedingung erfüllt ist, einen bestimmten Zeitraum darstellt, die Steuerungsvorrichtung des Batteriespeichersystems die Vollladung nach einer weiteren Verzögerung (t_{R1}, t_{R2}) beginnt.

9. Steuerungsvorrichtung (188) in einem Batteriespeichersystem (180), die zur Durchführung eines Verfahrens nach einem der Ansprüche 1 bis 8 eingerichtet ist.

10. Batteriespeichersystem (180), das Folgendes aufweist:
einen Leistungsanschluss (182), mittels dessen elektrische Energie in das Batteriespeichersystem (180) gespeist und aus dem Batteriespeichersystem (180) entnommen werden kann;
einen zwischen den Batteriezellen des Batteriespeichersystems und dem Leistungsanschluss (182) angeordneten Leistungsumrichter (181) mit einer Steuerungsvorrichtung (188) nach Anspruch 9, die eingerichtet ist, elektrische Leistungsflüsse von und zu dem mindestens einen Batteriemodul (184, 185) und durch den Leistungsumrichter (181) zu steuern;

11. Batteriespeichersystem (180) nach Anspruch 10, **gekennzeichnet durch** eine Energiegewinnungsvorrichtung (170) zur Erzeugung elektrischer Energie, die mit dem Leistungsumrichter (181) oder dem Leistungsanschluss (182) verbindbar ist.
